(19)

**Europäisches Patentamt**
**European Patent Office**
**Office européen des brevets**

(11)  **EP 2 292 690 B1**

(12)  # EUROPEAN PATENT SPECIFICATION

(45) Date of publication and mention
of the grant of the patent:
**02.01.2013 Bulletin 2013/01**

(51) Int Cl.:
**C08L 27/06** [(2006.01)]     **C08K 3/10** [(2006.01)]
**C08K 5/098** [(2006.01)]     **C08L 29/04** [(2006.01)]

(21) Application number: **09770111.4**

(22) Date of filing: **22.06.2009**

(86) International application number:
**PCT/JP2009/061305**

(87) International publication number:
**WO 2009/157401 (30.12.2009 Gazette 2009/53)**

(54) **POLYVINYL CHLORIDE RESIN COMPOSITION AND METHOD FOR PRODUCING SAME**

POLVINYLCHLORIDHARZZUSAMMENSETZUNG UND VERFAHREN ZU DEREN HERSTELLUNG

COMPOSITION D'UNE RÉSINE DE POLYCHLORURE DE VINYLE ET SON PROCÉDÉ DE PRÉPARATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.06.2008 JP 2008162657**
**23.06.2008 JP 2008162659**

(43) Date of publication of application:
**09.03.2011 Bulletin 2011/10**

(60) Divisional application:
**11009443.0 / 2 447 320**

(73) Proprietor: **Kuraray Co., Ltd.**
**Okayama 710-0801 (JP)**

(72) Inventors:
• **KATO, Masaki**
**Tainai-shi**
**Niigata 959-2691 (JP)**
• **TSUBOI, Akira**
**Kurashiki-shi**
**Okayama 713-8550 (JP)**
• **NAKAMAE, Masato**
**Kurashiki-shi**
**Okayama 713-8550 (JP)**

(74) Representative: **Müller-Boré & Partner**
**Patentanwälte**
**Grafinger Straße 2**
**81671 München (DE)**

(56) References cited:
**WO-A1-2009/010578     JP-A- 9 031 281**
**JP-A- 11 140 244     JP-A- 50 024 531**
**JP-A- 50 065 540**

• **DATABASE CA [Online] CHEMICAL ABSTRACTS SERVICE, COLUMBUS, OHIO, US; FUSE, KAZUYOSHI ET AL: XP002634960, retrieved from STN Database accession no. 1998:672596 -& WO 98/42759 A1 (SHIN-DAI-ICHI VINYL CORPORATION, JAPAN) 1 October 1998 (1998-10-01)**
• **DATABASE CA [Online] CHEMICAL ABSTRACTS SERVICE, COLUMBUS, OHIO, US; FUKUSHIMA, YOSHIBUMI ET AL: XP002634961, retrieved from STN Database accession no. 1989:58315 -& JP 63 171628 A (KURARAY CO., LTD., JAPAN) 15 July 1988 (1988-07-15)**

**Description**

TECHNICAL FIELD

The present invention relates to a polyvinyl chloride resin composition preferably used in applications for foods, medical use, household goods, and the like, and to describe further, relates to a polyvinyl chloride resin composition that is good in thermal stability and is less colored.

BACKGROUND ART

Polyvinyl chloride resins are processed for shaping by blending a stabilizer of calcium-zinc base, barium-zinc base, or the like therein, and are widely used as general molding materials and further as products suitable for foods, medical use, and the like.
Since these stabilizers have abilities insufficient to inhibit heat deterioration of the polyvinyl chloride resins, they used to have disadvantages, such as impairing initial colorability of the shaped articles and having not sufficient thermal stability while being shaped. Therefore, as a means for improvement of these disadvantages, polyvinyl chloride resin compositions are proposed to which an antioxidant is added or a compound having a hydroxyl group is added.
Patent Document 1 (JP 50-92947A) discloses a method of adding calcium soap, zinc soap, polyol or a derivative thereof, and a neutral inorganic calcium salt to a chloride-containing resin.
Patent Document 2 (JP 54-81359A) discloses a method of adding a water soluble polymer to a chloride-containing polymer.
Patent Document 3 (JP 57-147552A) discloses a method of adding a condensation reaction product of dipentaerythritol and dicarboxylic acid, zinc oxide, zinc carbonate or fatty acid zinc, and hydrotalcite to a chloride-containing resin.
Patent Document 4 (JP 60-238345A) discloses a method of adding a saponified product of an ethylene-vinyl acetate copolymer, having an ethylene unit content of from 20 to 50% and having a degree of saponification of a vinyl acetate unit of 96% or more, and a hydrotalcite-based compound to a thermoplastic resin.
Patent Document 5 (JP 1-178543A) discloses a method of adding metal soap and a saponified product of an ethylene-vinyl acetate copolymer having a copolymer composition that has an ethylene content of from 20 to 75 mol% and has a degree of saponification of a vinyl acetate portion of 50 mol% or more to a halogen-containing thermoplastic resin.
Patent Document 6 (JP 6-287387A) discloses a method of adding a metal salt of an organic acid and acetalized polyvinyl alcohol to a vinyl chloride-based resin.
Patent Document 7 (JP 9-3286A) discloses a method of adding partially saponified polyvinyl alcohol having a degree of saponification of from 70 to 95 mol%, having an average degree of polymerization of from 300 to 2000, and having a mercapto group at a molecular chain terminal to a vinyl chloride-based resin.
Patent Document 8 (JP 9-31281A) discloses a method of adding a zinc compound, hydrotalcites, polyvinyl alcohol, and polymethyl methacrylate to a vinyl chloride-based resin.
Non-Patent Document 1 (Japanese Journal of Polymer Science and Technology Vol. 47, No. 3, 197 (1990)) discloses a method of adding zinc stearate-calcium stearate complex soap and completely saponified polyvinyl alcohol having a degree of polymerization of 600 or more to polyvinyl chloride.
Non-Patent Document 2 (Japanese Journal of Polymer Science and Technology Vol. 47, No. 6, 509 (1990)) discloses a method of adding zinc stearate-calcium stearate complex soap and partially saponified polyvinyl alcohol having a degree of polymerization of 500 and having a degree of saponification of 73.6 mol% to polyvinyl chloride.
Non-Patent Document 3 (Japanese Journal of Polymer Science and Technology Vol. 50, No. 2, 65 (1993)) discloses a method of adding zinc stearate-calcium stearate complex soap and an ethylene-vinyl alcohol copolymer having an ethylene content of 29 mol% or more to polyvinyl chloride.
Non-Patent Document 4 (Polymers & Polymer Composites, Vol. 11, 649 (2003)) discloses a method of adding zinc stearate-calcium stearate complex soap, and polyvinyl alcohol having a degree of polymerization of 500 and having a degree of saponification of 98.5 mol% or an ethylene-vinyl alcohol copolymer having an ethylene content of 29 mol% or more to polyvinyl chloride.
Non-Patent Document 5 (Journal of the Adhesion Society of Japan Vol. 43, No. 2, 43 (2007)) discloses a method of adding polyvinyl alcohol having a degree of polymerization of 500 and having a degree of saponification of 88 mol% or polyvinyl alcohol having a degree of polymerization of 1700 and having a degree of saponification of 78 mol% or more, and polymethyl methacrylate to polyvinyl chloride.
However, the polyvinyl chloride resin compositions described in Patent Documents 1 through 8 and Non-Patent Documents 1 through 5 have problems of not being sufficient in the long term thermal stability and of being colored.

PRIOR ART DOCUMENTS

Patent Documents

Patent Document 1: JP 50-92947A
Patent Document 2: JP 54-81359A
Patent Document 3: JP 57-147552A
Patent Document 4: JP 60-238345A
Patent Document 5: JP 1-178543A
Patent Document 6: JP 6-287387A
Patent Document 7: JP 9-3286A
Patent Document 8: JP 9-31281A

Non-Patent Documents

Non-Patent Document 1: Japanese Journal of Polymer Science and Technology Vol. 47, No. 3, 197 (1990)
Non-Patent Document 2: Japanese Journal of Polymer Science and Technology Vol. 47, No. 6, 509 (1990)
Non-Patent Document 3: Japanese Journal of Polymer Science and Technology Vol. 50, No. 2, 65 (1993)
Non-Patent Document 4: Polymers & Polymer Composites, Vol. 11, 649 (2003)
Non-Patent Document 5: Journal of the Adhesion Society of Japan Vol. 43, No. 2, 43 (2007)

SUMMARY OF THE INVENTION

PROBLEMS TO BE SOLVED BY THE INVENTION

It is an object of the present invention to provide a polyvinyl chloride resin composition that is good in thermal stability while being shaped and with which a less colored shaped article can be obtained.

MEANS FOR SOLVING THE PROBLEMS

As a result of intensive studies, the present inventors have found that it is possible to keep sufficient thermal stability while being shaped and also make a less colored shaped article thereof by blending a specific amount of a vinyl alcohol-based polymer having a degree of saponification of from 30 to 99.9 mol%, having a viscosity average degree of polymerization of 1000 or less, and having a carboxyl group, a sulfonic acid group, or a salt thereof at a terminal to a polyvinyl chloride resin in a case of adding a stabilizer of a zinc compound to the polyvinyl chloride resin composition, and thus have come to complete a first invention.

That is, the first invention is a polyvinyl chloride resin composition comprising: from 0.005 to 5 parts by weight of a vinyl alcohol-based polymer having a degree of saponification of from 30 to 99.9 mol%, having a viscosity average degree of polymerization of 1000 or less, and having a carboxyl group, a sulfonic acid group, or a salt thereof at a terminal; and from 0.01 to 5 parts by weight of a zinc compound, based on 100 parts by weight of a polyvinyl chloride resin.

At this time, it is preferred that the vinyl alcohol-based polymer and the zinc compound are contained therein by adding them to the polyvinyl chloride resin.

In each of the inventions, it is preferred to further comprise from 0.001 to 10 parts by weight of a lubricant based on 100 parts by weight of the polyvinyl chloride resin. At this time, it is preferred that the lubricant is a fatty acid ester of polyol, and particularly preferred that it is glycerin monostearate.

The problem is also solved by a method of producing a polyvinyl chloride resin composition, comprising adding: from 0.005 to 5 parts by weight of a vinyl alcohol-based polymer having a degree of saponification of from 30 to 99.9 mol%, having a viscosity average degree of polymerization of 1000 or less, and having a carboxyl group, a sulfonic acid group, or a salt thereof at a terminal; and from 0.01 to 5 parts by weight of a zinc compound, based on 100 parts by weight of a polyvinyl chloride resin to the polyvinyl chloride resin.

Hereinafter, a vinyl alcohol-based polymer may be abbreviated as a PVA. A vinyl alcohol-based polymer having a carboxyl group, a sulfonic acid group, or a salt thereof at a terminal may be abbreviated as an acid-modified PVA.

EFFECTS OF THE INVENTION

The resin composition of the present invention is possible to achieve effects of being excellent in thermal stability while being shaped and of enabling to obtain a less colored shaped article.

MODE FOR CARRYING OUT THE INVENTION

As a material to produce a polyvinyl chloride resin used for the present invention, as well as a vinyl chloride monomer, a mixture having a vinyl chloride monomer as a main component and a monomer that is copolymerizable therewith (50 weight% or more of the vinyl chloride monomer) is used. The monomer copolymerized with the vinyl chloride monomer may include vinyl esters, such as vinyl acetate and vinyl propionate, acrylic esters or methacrylic esters, such as methyl acrylate and ethyl acrylate, olefins, such as ethylene and propylene, maleic anhydride, acrylonitrile, styrene, vinylidene chloride.

As a method of producing the polyvinyl chloride resin using these monomers, it is possible to preferably employ a method of suspension polymerizing the monomer in the presence of polymerization initiator. In such a case, a normally used dispersion stabilizer is used that is, for example, a water soluble polymer, such as a water soluble cellulose ether, like methylcellulose, hydroxyethyl cellulose, hydroxypropyl cellulose, hydroxypropyl methylcellulose, polyvinyl alcohol, and gelatin; an oil soluble emulsifier, such as sorbitan monolaurate, sorbitan trioleate, glycerin tristearate, and an ethylene oxide-propylene oxide block copolymer; a water soluble emulsifier, such as polyoxyethylene sorbitan monolaurate, polyoxyethylene glycerin oleate, and sodium laurate. Among them, polyvinyl alcohol having a degree of saponification of from 65 to 99 mol% and having a degree of polymerization of from 500 to 4000 is preferably used, which is added preferably from 0.01 to 2.0 parts by weight to 100 parts by weight of vinyl chloride. Although the dispersion stabilizer for suspension polymerization may be used singly, a polyvinyl alcohol-based polymer having a degree of polymerization of from 100 to 4000 and having a degree of saponification of from 30 to 99 mol%, which is normally used for suspension polymerizing a vinyl-based compound, such as vinyl chloride, in an aqueous medium, can be used and it is preferred to be from 0.01 to 2.0 parts by weight to 100 parts by weight of a vinyl-based compound, such as vinyl chloride although the amount thereof to be added is not particularly limited.

As the initiator used for polymerization, an oil soluble or water soluble polymerization initiator can be used that has been used for polymerization of a vinyl chloride monomer or the like conventionally. The oil soluble polymerization initiator may include, for example, percarbonate compounds, such as diisopropyl peroxydicarbonate, di-2-ethylhexyl peroxydicarbonate, and diethoxyethyl peroxydicarbonate; perester compounds, such as t-butyl peroxyneodecanoate, t-butyl peroxypivalate, t-hexyl peroxypivalate, and α-cumyl peroxyneodecanoate; peroxides, such as acetyl cyclohexyl sulfonyl peroxide, 2,4,4-trimethylpentyl-2-peroxyphenoxyacetate, 3,5,5-trimethyl hexanoyl peroxide, and lauroyl peroxide; azo compounds, such as azobis-2,4-dimethylvaleronitrile and azobis(4-2,4-dimethylvaleronitrile), and the like. The water soluble polymerization initiator may include, for example, potassium persulfate, ammonium persulfate, hydrogen peroxide, cumene hydroperoxide. These oil soluble or water soluble polymerization initiators can be used singly or in combination of two or more types.

Upon polymerization, it is possible to add various other additives to the polymerization reaction system as needed. The additives may include, for example, polymerization regulators, such as aldehydes, halogenated hydrocarbons, and mercaptans, polymerization inhibitors, such as a phenol compound, a sulfur compound, and an N-oxide compound. In addition, it is also possible to arbitrarily add a pH adjuster, a crosslinker.

Upon polymerization, the polymerization temperature is not particularly limited and it can also be adjusted to a low temperature at approximately 20°C as well as a high temperature at over 90°C. It is also one of preferred embodiments to use a polymerization vessel with a reflux condenser to enhance the heat removal efficiency of the polymerization reaction system.

For the polymerization, it is possible to arbitrarily add additives, such as antiseptics, mildewcides, antiblocking agents, defoamers, antifouling agents, and antistatics, that are normally used for polymerization as needed.

The modified PVA contained in the polyvinyl chloride resin composition of the present invention is a vinyl alcohol-based polymer having a carboxyl group, a sulfonic acid group, or a salt thereof at a terminal. The modified PVA can be contained therein by, for example, being added to the polyvinyl chloride resin after polymerizing to obtain a polyvinyl chloride resin. The modified PVA can be added in powder or by being dissolved in water or an organic solvent to the polyvinyl chloride resin. As the modified PVA is added when polymerizing to obtain the polyvinyl chloride resin, the modified PVA act as a dispersant for the polyvinyl chloride resin, so that it may affect the quality of the polyvinyl chloride resin thus obtained, such as the average particle diameter and the plasticizer absorbency.

Such modified PVA has a degree of saponification of from 30 to 99.9 mol%, preferably from 40 to 98.5 mol%, and particularly preferably from 50 to 96 mol%. In a case of the degree of saponification of less than 30 mol%, the long term thermal stability decreases and thus it is not preferred. The degree of saponification of the modified PVA is a value measured in accordance with JIS K6726.

The modified PVA has a viscosity average degree of polymerization (hereinafter, may be referred to simply as a degree of polymerization) of 1000 or less, preferably 800 or less, and particularly preferably 700 or less. Although a lower limit of the viscosity average degree of polymerization is not particularly limited, the viscosity average degree of polymerization is preferably 50 or more and more preferably 100 or more from the perspective of production of the modified PVA. When the viscosity average degree of polymerization is more than 1000, the long term thermal stability seriously decreases and thus it is not preferred. The viscosity average degree of polymerization of the modified PVA is a value measured in accordance with JIS K6726. That is, it can be obtained by the following expression using limiting viscosity $[\eta]$ that is measured in water at 30°C after resaponifying the modified PVA to a degree of saponification of 99.5 mol% or more and purifying it.

$$P = ([\eta] \times 1000/8.29)^{(1/0.62)}$$

In the present invention, the modified PVA may be used singly or may also be used by mixing two or more types having different properties.

The acid-modified PVA used in the invention is required to have a carboxyl group, a sulfonic acid group, or a salt thereof at a terminal. A method of producing the acid-modified PVA is not particularly limited and a variety of methods can be employed, and it may include, for example, (1) a method of polymerizing a vinyl ester with a compound having a functional group, such as alcohol, aldehyde, and thiol each having a carboxyl group or a sulfonic acid group, coexisted as a chain transfer agent and saponifying a polymer thus obtained or (2) a method of introducing a carboxyl group or a salt thereof, or a sulfonic acid group or a salt thereof, into a terminal of a partially saponified polyvinyl alcohol-based polymer by a chemical reaction (refer to WO91/15518).

As a method of obtaining the acid-modified PVA more economically and efficiently, preferred is a method of polymerizing vinyl esters, such as vinyl acetate, in the presence of a chain transfer agent having a carboxyl group, particularly thiol having a carboxyl group and subsequently saponifying it. Examples of such thiol may include thiol having a carboxyl group, such as thioglycolic acid, 2-mercapto propionic acid, 3-mercapto propionic acid, thiomalic acid, 2-mercapto benzoic acid, 3-mercapto benzoic acid, 4-mercapto benzoic acid, and 4-carboxyphenyl ethyl thiol. The carboxyl group may be an ester or may also be a salt such as an alkali metal salt.

Preferred is a method of polymerizing vinyl esters, such as vinyl acetate, in the presence of a chain transfer agent having a sulfonic acid group, particularly thiol having a sulfonic acid group and subsequently saponifying it. Examples of such thiol may include thiol having a sulfonic acid group, such as 2-mercapto ethanesulfonic acid, 3-mercapto propanesulfonic acid, and 2-mercapto ethylbenzenesulfonic acid. The sulfonic acid group may be an ester or may also be a salt such as an alkali metal salt.

When introducing the chain transfer agent having a carboxyl group or a sulfonic acid group into a PVA, the carboxyl group or the sulfonic acid group is sometimes converted to an alkali metal salt, such as a sodium salt, after going through a process such as saponification, and they may also be in such a form.

These modified PVAs can be produced by polymerizing a vinyl ester-based monomer by employing a conventionally known process, such as bulk polymerization, solution polymerization, suspension polymerization, emulsion polymerization, and dispersion polymerization, and saponifying the vinyl ester-based polymer thus obtained. Polymerization processes preferred from the industrial perspective are solution polymerization, emulsion polymerization, and dispersion polymerization. For the polymerization operation, any polymerization system can be employed among batch process, semi-batch process, and continuous process.

The vinyl ester-based monomer allowed to be used for the polymerization may include, for example, vinyl acetate, vinyl formate, vinyl propionate, vinyl caprylate, vinyl versatate, and among them, vinyl acetate is preferred from the industrial perspective.

Upon the polymerization of the vinyl ester-based monomer, although it is allowed to copolymerize the vinyl ester-based monomer with another monomer as long as not impairing the spirit of the present invention, it is preferred to homopolymerize the vinyl ester-based monomer.

Upon the polymerization of the vinyl ester-based monomer, it is allowed to copolymerize the vinyl ester-based monomer with another monomer as long as not impairing the spirit of the present invention. Monomers that can be used may include, for example, α-olefins, such as propylene, n-butene, and isobutylene; acrylic acid and a salt thereof, acrylic acid esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and a salt thereof; methacrylic acid esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamide propanesulfonic acid and a salt thereof, acrylamide propyl dimeth-

5

ylamine and a salt thereof or a quaternary salt thereof, and N-methylolacrylamide and a derivative thereof; methacrylamide derivatives, such as methacrylamide, N-methyl methacrylamide, N-ethyl methacrylamide, methacrylamide propanesulfonic acid and a salt thereof, methacrylamide propyl dimethylamine and a salt thereof or a quaternary salt thereof, and N-methylolmethacrylamide and a derivative thereof; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; nitriles, such as acrylonitrile and methacrylonitrile; vinyl halides, such as vinyl chloride and vinyl fluoride; vinylidene halides, such as vinylidene chloride and vinylidene fluoride; allyl compounds, such as allyl acetate and allyl chloride; unsaturated dicarboxylic acids, such as maleic acid, itaconic acid, and fumaric acid, and salts thereof or esters thereof; vinyl silyl compounds, such as vinyl trimethoxysilane; monomers containing an oxyalkylene group, such as polyoxyethylene (meth)acrylate, polyoxypropylene (meth)acrylate, polyoxyethylene (meth)acrylamide, polyoxypropylene (meth)acrylamide, polyoxyethylene (1-(meth)acrylamide-1,1-dimethyl propyl)ester, polyoxyethylene (meth)allyl ether, polyoxypropylene (meth)allyl ether, polyoxyethylene vinyl ether, and polyoxypropylene vinyl ether; and isopropenyl acetate.

In the present invention, it is also possible to use a modified PVA having a high content of 1,2-glycol bond that is obtained by polymerizing the vinyl ester-based monomer at a temperature condition higher than normal polymerization. In this case, the content of 1, 2-glycol bond is preferably 1. 9 mol% or more, more preferably 2.0 mol% or more, and even more preferably 2.1 mol% or more.

To the saponification reaction of the vinyl ester-based polymer, an alcoholysis or hydrolysis reaction can be applied using conventionally known basic catalysts, such as sodium hydroxide, potassium hydroxide, and sodium methoxide, or acid catalysts, such as p-toluenesulfonic acid. The solvent used for the saponification reaction may include alcohols, such as methanol and ethanol; esters, such as methyl acetate and ethyl acetate; ketones, such as acetone and methyl ethyl ketone; and aromatic hydrocarbons, such as benzene and toluene, and they can be used singly or in combination of two or more types. Among all, it is preferred for the convenience to carry out a saponification reaction using methanol or mixed solution of methanol and methyl acetate as the solvent in the presence of sodium hydroxide as the basic catalyst.

The modified PVA contained in the polyvinyl chloride resin composition is from 0.005 to 5 parts by weight based on 100 parts by weight of the polyvinyl chloride resin, and preferably from 0.04 to 3 parts by weight. The long term thermal stability is not sufficient in a case of less than 0.005 parts by weight, and in a case of exceeding 5 parts by weight, the polyvinyl chloride resin is colored and it is not preferred.

In a case of adding the modified PVA used for the present invention when polymerizing to obtain the polyvinyl chloride resin, most of the modified PVA is removed by washing of the polyvinyl chloride resin after producing the resin, so that the content of the modified PVA in the polyvinyl chloride resin composition becomes less than 0.005 parts by weight and thus the effect as a thermostabilization aid is not obtained.

In the present invention, the modified PVA may also contain an acid having pKa at 25°C of from 3.5 to 5.5 and/or a metal salt thereof. The type of the acid is not particularly limited, and the specific examples may include acetic acid (pKa of 4.76), propionic acid (pKa of 4.87), butyric acid (pKa of 4.63), octanoic acid (pKa of 4.89), adipic acid (pKa of 5.03), benzoic acid (pKa of 4.00), formic acid (pKa of 3.55), valeric acid (pKa of 4.63), heptanoic acid (pKa of 4.66), lactic acid (pKa of 3.66), phenylacetic acid (pKa of 4.10), isobutyric acid (pKa of 4.63), cyclohexanecarboxylic acid (pKa of 4.70). Particularly preferably used acids are acetic acid, propionic acid, and lactic acid. It is also possible to use metal salts of the acids above. Although the type of the metal salt is not particularly limited, a salt of alkali metal, such as sodium, potassium, magnesium, or calcium, is normally used.

The acid having pKa of from 3.5 to 5.5 and/or a metal salt thereof is preferably contained at a ratio of from 0.05 to 5 parts by weight based on 100 parts by weight of the modified PVA, more preferably from 0.1 to 3 parts by weight, and even more preferably from 0.15 to 2 parts by weight. The long term thermal stability decreases in a case that the acid and/or a metal salt thereof is contained less than 0.05 parts by weight to the modified PVA, and in a case of exceeding 5 parts by weight, the polyvinyl chloride resin is colored and thus it is not preferred.

The method of containing the acid and/or a metal salt thereof in a predetermined amount is not particularly specified and may include, for example, a method of adjusting the type, the amount of the alkali catalyst used for the saponification when producing the modified PVA, a method of adding or removing the acid and/or a metal salt thereof after producing the modified PVA.

The zinc compound used in the present invention may include aliphatic carboxylates of zinc, such as zinc stearate, zinc laurate, and zinc oleate, aromatic carboxylic acid zinc, such as zinc benzoate and zinc p-tert butyl benzoate, zinc salts of an organic acid, such as an amino acid zinc salt and a phosphate zinc salt, inorganic zinc salts, such as zinc oxide and zinc carbonate. The zinc compound is added from 0.01 to 5 parts by weight based on 100 parts by weight of the polyvinyl chloride resin, and preferably from 0.05 to 3 parts by weight. The sufficient thermal stability effect is not obtained in a case of being added in the amount of less than 0.01 parts by weight, and in a case of exceeding 5 parts by weight, a shaped article of the vinyl chloride resin composition is blackened and thus it is not preferred. The zinc compound can be contained by adding it to the polyvinyl chloride resin after polymerizing to obtain a polyvinyl chloride resin.

Together with the polyvinyl chloride resin composition of the present invention, it is possible to use stabilizers, phenolic antioxidants, phosphorous antioxidants, light stabilizers, ultraviolet absorbers, antifog agents, antistatics, flame retardants, lubricants, modifiers, reinforcements, pigments, blowing agents, plasticizers, that are normally used. To the polyvinyl chloride resin composition of the present invention, another resin may also be mixed as long as not impairing the mechanical properties.

The lubricants may include hydrocarbons, such as liquid paraffin, natural paraffin, micro wax, and polyethylene wax; fatty acids, such as stearic acid and lauric acid; fatty acid amides, such as stearic amide, palmitic amide, methylenebisstearoamide, and ethylenebisstearoamide; fatty acid esters of monoalcohol, such as butyl stearate; fatty acid esters of polyol, such as hydrogenated castor oil, ethylene glycol monostearate, glycerin monostearate, and triethylene glycol di-2-ethyl hexanoate; alcohols, such as cetyl alcohol and stearyl alcohol. Among all, in a case of using a fatty acid ester of polyol, the effect of the present invention is exhibited even more. At this time, it is preferred to be a fatty acid monoester of polyol and also preferred to be a fatty acid ester of glycerin. In addition, the fatty acid of the fatty acid ester preferably has a carbon number of from 8 to 22 and is even more preferably a stearic acid ester. Among them, glycerin monostearate is particularly preferred. The lubricant is added preferably from 0.001 to 10 parts by weight based on 100 parts by weight of the polyvinyl chloride resin, and even more preferably from 0.05 to 5 parts by weight.

As the stabilizer, well known ones can be used and they may specifically include organic metal salts, such as soap of alkaline earth metals, like calcium soap and barium soap, aluminum soap, and organic phosphoric acid metal salts; inorganic metal salts, such as metal oxide, metal hydroxide, metal carbonate, and inorganic complex metal salts, like zeolite; halogen oxy acid salts, such as barium chlorate, barium perchlorate, and sodium perchlorate; and non-metallic stabilizers, such as β-diketone, polyol, and epoxy compounds.

The plasticizer may include, for example, ester-based plasticizers, such as an ester of an acid, like phthalic acid, trimellitic acid, pyromellitic acid, adipic acid, sebacic acid, and azelaic acid, and a single linear or branched alkyl alcohol, or a mixture thereof, like n-propanol, isopropanol, n-butanol, isobutanol, tert-butanol, n-pentanol, isopentanol, tert-pentanol, n-hexanol, isohexanol, n-heptanol, isoheptanol, n-octanol, isooctanol, 2-ethylhexanol, n-nonanol, isononanol, n-decanol, isodecanol, lauryl alcohol, myristyl alcohol, palmityl alcohol, and stearyl alcohol, and an ester of butanediol and adipic acid; epoxy-based plasticizers, such as epoxidized soybean oil, epoxidized linseed oil, epoxidized castor oil, epoxidized linseed oil fatty acid butyl, octyl epoxy stearate, epoxy triglyceride, diisodecyl epoxy-hexahydrophthalate, or a low molecular weight reaction product resin of bisphenol A with epichlorohydrin; and phosphate-based plasticizers, such as tricresyl phosphate, trixylenyl phosphate, monobutyl dixylenyl phosphate, and trioctyl phosphate.

The phenolic antioxidant may be any of those used normally, and may include, for example, 2,6-ditertiary butyl-p-cresol, 2,6-diphenyl-4-octadecyloxyphenol, stearyl(3,5-ditertiary butyl-4-hydroxyphenyl)-propionate, distearyl(3,5-ditertiary butyl-4-hydroxybenzyl)phosphonate, thiodiethylene glycol bis[(3,5-ditertiary butyl-4-hydroxyphenyl)propionate], 1,6-hexamethylene bis[(3,5-ditertiary butyl-4-hydroxyphenyl)propionate], 1,6-hexamethylene bis[(3,5-ditertiary butyl-4-hydroxyphenyl)propionic acid amide], 4,4'-thiobis(6-tertiary butyl-m-cresol), 2,2'-methylene bis(4-methyl-6-tertiary butylphenol), 2,2'-methylene bis(4-ethyl-6-tertiary butylphenol), bis[3,3-bis(4-hydroxy-3-tertiary butylphenyl)butyric acid]glycol ester, 2,2'-ethylidene bis(4,6-ditertiary butylphenol), 2,2' ethylidene bis(4-secondary butyl-6-tertiary butylphenol), 1,1,3-tris(2-methyl-4-hydroxy-5-tertiary butylphenyl)butane, bis[2-tertiary butyl-4-methyl-6-(2-hydroxy-3-tertiary butyl-5-methylbenzyl)phenyl]terephthalate, 1,3,5-tris(3,5-ditertiary butyl-4-hydroxybenzyl)-2,4,6-trimethylbenzene, 1,3,5-tris[(3,5-ditertiary butyl-4-hydroxyphenyl)propionyloxyethyl]isocyanurate, tetrakis[methylene-3-(3,5-ditertiary butyl-4-hydroxyphenyl)propionate]methane, 2 tertiary butyl-4-methyl-6-(2-acryloyloxy-3-tertiary butyl-5-methylbenzyl)phenol, 3,9-bis[1,1-dimethyl-2-{(3-tertiary butyl-4-hydroxy-5-methylphenyl)propionyloxy}ethyl]-2,4,8,10 -tetraoxaspiro[5.5]undecane, and triethylene glycol bis[(3-tertiary butyl-4-hydroxy-5-methylphenyl)propionate]. The phenolic antioxidant is added preferably from 0.01 to 5 parts by weight based on 100 parts by weight of the polyvinyl chloride resin, and even more preferably from 0.1 to 3 parts by weight.

The phosphorous antioxidant may be any of those used normally, and may include, for example, trisnonylphenyl phosphite, tris(2,4-ditertiary butylphenyl)phosphite, tris[2-tertiary butyl-4-(3-tertiary butyl-4-hydroxy-5-methylphenylthio)-5-methylphenyl]phosphit e, tridecyl phosphite, octyl diphenyl phosphite, di(decyl)monophenyl phosphite, di(tridecyl) pentaerythritol diphosphite, distearyl pentaerythritol diphosphite, di(nonylphenyl)pentaerythritol diphosphite, bis(2,4-ditertiary butylphenyl)pentaerythritol diphosphite, bis(2,6-ditertiary butyl-4-methylphenyl)pentaerythritol diphosphite, bis (2,4,6-tritertiary butylphenyl)pentaerythritol diphosphite, tetra(tridecyl)isopropylidenediphenol diphosphite, tetra(tridecyl)-4,4'-n-butylidenebis(2-tertiary butyl-5-methylphenol)diphosphite, hexa(tridecyl)-1,1,3-tris(2-methyl-4-hydroxy-5-tertiary butylphenyl)butane triphosphite, tetrakis(2,4-ditertiary butylphenyl)biphenylene diphosphonite, 9,10-dihydro-9-oxa-10-phosphaphenanthrene-10-oxide, and 2,2'-methylenebis(4-methyl-6-tertiary butylphenyl)-2-ethylhexyl phosphite. The phosphorous antioxidant is added preferably from 0. 001 to 5 parts by weight based on 100 parts by weight of the polyvinyl chloride resin, and even more preferably from 0.005 to 3 parts by weight.

The ultraviolet absorber may include, for example, 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl)benzotriazoles, such as 2-(2-hydroxy-5-tertiary octylphenyl)benzotriazole, 2-(2-hydroxy-3,5-ditertiary butylphenyl)-5-chlorobenzotriazole, 2-(2-hydroxy-3-tertiary butyl-5-methylphenyl)-5-chlorobenzotriazole, 2-(2-hydroxy-3,5-dicumylphenyl)benzotriazole, 2,2'-methylenebis(4-tertiary octyl-6-benzotriazolyl)phenol, and a polyethylene glycol ester of 2-(2-hydroxy-3-tertiary butyl-5-carboxyphenyl)benzotriazole; benzoates, such as phenyl salicylate resorcinol monobenzoate, 2,4-ditertiary butylphenyl-3,5-ditertiary butyl-4-hydroxybenzoate, and hexadecyl-3,5-ditertiary butyl-4-hydroxybenzoate; substituted oxanilides, such as 2-ethyl-2'-ethoxyoxanilide, and 2-ethoxy-4'-dodecyloxanilide; and cyanoacrylates, such as ethyl-$\alpha$-cyano-$\beta$, $\beta$-diphenylacrylate and methyl-2-cyano-3-methyl-3-(p-methoxyphenyl)acrylate. The ultraviolet absorber is added preferably from 0. 005 to 10 parts by weight based on 100 parts by weight of the vinyl chloride, and even more preferably from 0.01 to 5 parts by weight.

The light stabilizer may include, for example, hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)butanetetracarboxy late, tetrakis(1,2,2,6,6-pentamethyl-4-piperidyl)butanetetracarbo xylate, bis(1,2,2,6,6-pentamethyl-4-piperidyl)di(tridecyl)-1,2,3,4-butanetetracarboxylate, bis(1,2,2,6,6-pentamethyl-4-hydroxybenzyl)malonate, a 1-(2-hydroxyethyl)-2,2,6,6-tetramethyl-4-piperidinol/diethy 1 succinate polycondensation product, a 1,6-bis(2,2,6,6-tetraethyl-4-piperidylamino)hexane/dibromoe thane polycondensation product, a 1,6-bis(2,2,6,6-tetramethyl-4-piperidylamino) hexane/2,4-dic hloro-6-morpholino-s-triazine polycondensation product, a 1,6-bis(2,2,6,6-tetramethyl-4-piperidylamino) hexane/2,4-dic hloro-6-tertiary octylamino-s-triazine polycondensation product, 1,5,8,12-tetrakis[2,4-bis(N-butyl-N-(2,2, 6,6-tetramethyl-4-piperidyl)amino)-s-triazine-6-yl]-1,5,8,12-tetraazadodecane, 1,6,11-tris[2,4-bis(N-butyl-N-(2,2,6,6-te tramethyl-4-piperi dyl)amino)-s-triazine-6-ylamino]undecane, and 1,6,11-tris[2,4-bis(N-butyl-N-(1,2,2,6,6-pentamethyl-4-pipe ridyl)amino)-s-triazine-6-ylamino]undecane. The light stabilizer is added preferably from 0.001 to 5 parts by weight based on 100 parts by weight of the polyvinyl chloride resin, and even more preferably from 0.05 to 3 parts by weight.
A method of processing the polyvinyl chloride resin composition of the present invention may include extrusion processing, calender processing, blow molding, press processing, powder molding, injection molding. Examples
The present invention is described below by way of Examples further in detail. In Examples and Comparative Examples below, parts and % denote parts by weight and weight%, respectively, unless otherwise specified.

Example 1

(Production of Polyvinyl Chloride Resin)

Polyvinyl alcohol, having a degree of polymerization of 850 and having a degree of saponification of 72 mol%, in an amount equivalent to 600 ppm with respect to vinyl chloride was dissolved in deionized water to prepare a dispersion stabilizer. The dispersion stabilizer thus obtained was charged in a glass-lined autoclave on which an antifouling agent, NOXOL WSW (produced by CIRS) was applied so as to have a solid content of 0.3 g/m$^2$. Subsequently, 0.04 parts of a 70% toluene solution of diisopropyl peroxydicarbonate was charged in the glass-lined autoclave, and after removing oxygen by degassing until the pressure in the autoclave becomes 0.0067 MPa, 30 parts of vinyl chloride was charged therein and the contents in the autoclave were raised in temperature to 57°C while being stirred to initiate polymerization. The pressure in the autoclave when initializing the polymerization was 0.83 MPa. After seven hours since the initiation of polymerization, the polymerization is terminated at the time of the pressure in the autoclave being 0.44 MPa, and unreacted vinyl chloride was removed, followed by taking the polymerization reaction product out to dry it at 65°C overnight, and thus a polyvinyl chloride resin (PVC) was obtained.

(Production of Acid-Modified PVA)

In a 6 L reaction vessel provided with a stirrer, a nitrogen inlet port, an additive inlet port, and an initiator addition port, 2400 parts of vinyl acetate, 600 parts of methanol, and 0.45 parts of 3-mercapto propionic acid (hereinafter, referred to as 3-MPA) were charged and were raised in temperature to 60°C, followed by purging inside the system with nitrogen by nitrogen bubbling for 30 minutes. The temperature within the reaction vessel was adjusted to 60°C and 1.2 parts of 2,2'-azobis(4-methoxy-2,4-dimethylvaleronitrile) was added to initiate polymerization. The polymerization temperature was maintained at 60°C during the polymerization, and 24.0 parts of the 50% methanol solution of 3-MPA was added at a constant rate over four hours. It was cooled after four hours when the polymerization conversion reached 60% to terminate the polymerization. Subsequently, unreacted vinyl acetate was removed under reduced pressure to obtain a methanol solution of polyvinyl acetate (PVAc). A methanol solution of NaOH (10% concentration) was added to a PVAc solution adjusted to 30% so as to make the alkali molar ratio (mole number of NaOH/mole number of vinyl ester unit in PVAc) to become 0.004 for saponification. By way of the above operation, an acid-modified PVA was obtained that has a degree of saponification of 63.0 mol%. The sodium acetate content measured by isotachophoresis was 1.5%. The acid-modified PVA was dissolved in heavy water for nuclear magnetic resonance analysis, and the presence of a carboxyl group (Sodium carboxylate group) at one terminal of the molecules was confirmed. The viscosity average degree of polymerization of the acid-modified PVA was 250 that was measured in accordance with an ordinary method of JIS K6726.

(Thermal Stability Test)

To 100 parts by weight of the polyvinyl chloride resin, an acid-modified PVA in an amount shown in Table 1, 2 parts by weight of zinc stearate, 1 part by weight of calcium stearate, and 20 parts by weight of dioctyl phthalate were mixed. The polyvinyl chloride resin composition was kneaded at 170°C for five minutes with a test roll to fabricate a sheet having a thickness of 0.45 mm. The sheet was cut into 50 × 70 mm. The sheet pieces were put into a gear oven, and the time period until they were completely blackened at a temperature of 180°C was measured to make it an index of the thermal stability.

(Colorability Test)

The sheet obtained from the test roll was cut into 45 x 30 mm, and several sheet pieces thus obtained were stacked and pressed at 185°C for five minutes to create a test piece having a thickness of 5 mm, and the colorability was compared visually and determined in accordance with the following standards.

A: almost not colored
B: yellowed
C: yellow-browned

Example 2

In the same method as Example 1 other than using mercapto 1-propanesulfonic acid sodium as a chain transfer agent, modifying the weights of the vinyl acetate and methanol charged upon polymerization and modifying the alkali molar ratio for saponification, an acid-modified PVA shown in Table 1 was obtained. The thermal stability and the colorability were evaluated in the same way as Example 1. The results of evaluation are shown in Table 1.

Examples 3, 4

They are examples of adding 1 part by weight of glycerin monostearate, as a lubricant, based on 100 parts by weight of the polyvinyl chloride resin. It was mixed in the same way as Example 1 in a formula shown in Table 1, and the thermal stability and the colorability were evaluated. The results of evaluation are shown in Table 1.

Comparative Example 1

In the same method as Example 1 other than not using the chain transfer agent, modifying the weights of the vinyl acetate and methanol charged upon polymerization and modifying the alkali molar ratio for saponification, an unmodified PVA shown in Table 1 was obtained. The thermal stability and the colorability were evaluated in the same way as Example 1. The results of evaluation are shown in Table 1. The long term thermal stability was not sufficient.

Comparative Examples 2, 3

In the same way as Example 1 other than modifying the amount of the acid-modified PVA blended therein relative to the polyvinyl chloride resin (PVC) as shown in Table 1, the thermal stability and the colorability were evaluated. The results of evaluation are shown in Table 1. It was colored in yellow in a case of too much acid-modified PVA blended therein, and the long term thermal stability was not sufficient in a case of too little.

Comparative Example 4

In the same way as Example 1 other than not adding the acid-modified PVA to the polyvinyl chloride resin, the thermal stability and the colorability were evaluated. The results of evaluation are shown in Table 1. The thermal stability was not sufficient.

Comparative Examples 5, 6

In the same way as Example 1 other than modifying the amount of zinc stearate blended therein as shown in Table 1, the thermal stability and the colorability were evaluated. The results of evaluation are shown in Table 1. Any of them were insufficient in the thermal stability and the sheets were colored.

Comparative Example 7

(Production of PVA with SH at Terminal)

In a 6 L reaction vessel provided with a stirrer, a nitrogen inlet port, an additive inlet port, and an initiator addition port, 2450 g of vinyl acetate and 1050 g of methanol were charged and were raised in temperature to 60°C, followed by purging inside the system with nitrogen by nitrogen bubbling for 30 minutes. As a chain transfer agent, a 15% concentration solution of thioacetic acid dissolved in methanol was prepared and was purged with nitrogen by bubbling with a nitrogen gas. The temperature within the reaction vessel was adjusted to 60°C and 5. 6 g of the methanol solution of thioacetic acid prepared in advance was added thereto, and then 2.0 g of 2,2'-azobis(isobutyronitrile) was added to initiate polymerization. The polymerization temperature was maintained at 60°C during the polymerization, and the 15% methanol solution of thioacetic acid was continuously added at 14.5 mL/hr. It was cooled after four hours when the polymerization conversion reached 60% to terminate the polymerization. Subsequently, unreacted vinyl acetate was removed under reduced pressure to obtain a methanol solution of polyvinyl acetate (PVAc). A methanol solution of NaOH (10% concentration) was added to a PVAc solution adjusted to 30% so as to make the alkali molar ratio (mole number of NaOH/ mole number of vinyl ester unit in PVAc) to become 0.004 for saponification. By way of the above operation, a PVA with SH at a terminal was obtained that has a degree of polymerization of 250 and has a degree of saponification of 63 mol%. The sodium acetate content measured by isotachophoresis was 1.5%. The PVA with SH at a terminal was dissolved in heavy water for nuclear magnetic resonance analysis, and the presence of an SH group at one terminal of the molecules was confirmed.
The thermal stability and the colorability were evaluated in the same way as Example 1 other than using the PVA with SH at a terminal instead of the acid-modified PVA used in Example 1. The results of evaluation are shown in Table 1.

Comparative Examples 8, 9

They are examples of adding 1 part by weight of glycerin monostearate, as a lubricant, based on 100 parts by weight of the polyvinyl chloride resin. It was mixed in the same way as Example 1 in a formula shown in Table 1, and the thermal stability and the colorability were evaluated. The results of evaluation are shown in Table 1.

Example 5 (not part of the invention)

(Production of Alkyl-Modified PVA)

In a 6 L reaction vessel provided with a stirrer, a nitrogen inlet port, an additive inlet port, and an initiator addition port, 2400 parts of vinyl acetate, 600 parts of methanol, and 0.99 parts of n-dodecyl mercaptan (hereinafter, referred to as n-DDM) were charged and were raised in temperature to 60°C, followed by purging inside the system with nitrogen by nitrogen bubbling for 30 minutes. The temperature within the reaction vessel was adjusted to 60°C and 1.2 parts of 2,2'-azobis(4-methoxy-2,4-dimethylvaleronitrile) was added to initiate polymerization. The polymerization temperature was maintained at 60°C during the polymerization, and 95.6 parts of a methanol/vinyl acetate solution (vinyl acetate concentration of 80%) containing 19 parts of n-DDM was added at a constant rate over five hours. It was cooled after five hours when the polymerization conversion reached 50% to terminate the polymerization. Subsequently, unreacted vinyl acetate was removed under reduced pressure to obtain a methanol solution of polyvinyl acetate (PVAc). A methanol solution of NaOH (10% concentration) was added to a PVAc solution adjusted to 30% so as to make the alkali molar ratio (mole number of NaOH/mole number of vinyl ester unit in PVAc) to become 0.008 for saponification. By way of the above operation, an alkyl-modified PVA was obtained that has a degree of saponification of 88.0 mol%. The sodium acetate content measured by isotachophoresis was 1.0%. The alkyl-modified PVA was washed with methyl acetate containing a small amount of water under reflux and purified by soxhlet extraction with methanol for 48 hours, and then dissolved in heavy water for NMR analysis. Thus, the proton of the methyl group of the n-dodecyl group was found at $\sigma$ = 0.85 - 1.10 ppm and it was confirmed to be an alkyl-modified PVA having a $CH_3$-$(CH_2)_{11}$-S group at one terminal of the molecules. The viscosity average degree of polymerization of the alkyl-modified PVA was 250 that was measured in accordance with an ordinary method of JIS K6726.

(Thermal Stability Test)

To 100 parts by weight of the polyvinyl chloride resin obtained in the same manner as Example 1, an aqueous alkyl-modified PVA solution was added using a 1% concentration aqueous alkyl-modified PVA solution to make it an amount shown in Table 1, and was dried at 50°C for eight hours by a vacuum dryer. To the vinyl chloride resin composition, 2 parts by weight of zinc stearate, 1 part by weight of calcium stearate, and 20 parts by weight of dioctyl phthalate were mixed. The vinyl chloride resin composition was kneaded at 175°C for five minutes with a test roll to fabricate a sheet having a thickness of 0.45 mm. The sheet was cut into 50 × 70 mm. The sheet pieces were put into a gear oven, and the time period until they were completely blackened at a temperature of 180°C was measured to make it an index of the thermal stability.

(Colorability Test)

The sheet obtained from the test roll was cut into 45 × 30 mm, and several sheet pieces thus obtained were stacked and pressed at 185°C for five minutes to fabricate a test piece having a thickness of 5 mm, and the colorability was compared visually and determined in accordance with the following standards.

    A: almost not colored
    B: yellowed
    C: yellow-browned

Example 6 (not part of the invention)

In the same method as Example 5 other than changing the type of the chain transfer agent into n-octyl mercaptan, modifying the weights of the vinyl acetate, the methanol, and the chain transfer agent (n-octyl mercaptan) charged upon polymerization and modifying the alkali molar ratio for saponification, an alkyl-modified PVA shown in Table 2 was obtained. The thermal stability and the colorability were evaluated in the same way as Example 5. The results of evaluation are shown in Table 2.

Example 7 (not part of the invention)

In the same method as Example 5 other than changing the type of the chain transfer agent into n-hexyl mercaptan, modifying the weights of the vinyl acetate, the methanol, and the chain transfer agent (n-hexyl mercaptan) charged upon polymerization and modifying the alkali molar ratio for saponification, an alkyl-modified PVA shown in Table 2 was obtained. The thermal stability and the colorability were evaluated in the same way as Example 5. The results of evaluation are shown in Table 2.

Examples 8 through 10 (not part of the invention)

They are examples of adding 1 part by weight of glycerin monostearate, as a lubricant, based on 100 parts by weight of the vinyl chloride resin. It was mixed in the same way as Example 5 in a formula shown in Table 2, and the thermal stability and the colorability were evaluated. The results of evaluation are shown in Table 2.

Comparative Example 10

In the same method as Example 5 other than changing the type of the chain transfer agent into t-butyl mercaptan, modifying the weights of the vinyl acetate, the methanol, and the chain transfer agent (t-butyl mercaptan) charged upon polymerization and modifying the alkali molar ratio for saponification, an alkyl-modified PVA shown in Table 2 was obtained. The thermal stability and the colorability were evaluated in the same way as Example 5. The results of evaluation are shown in Table 2. The long term thermal stability was not sufficient.

Comparative Examples 11, 12

In the same way as Example 5 other than modifying the amount of the alkyl-modified PVA blended therein relative to the vinyl chloride-based resin (PVC) as shown in Table 2, the thermal stability and the colorability were evaluated. The results of evaluation are shown in Table 2. It was colored in yellow in a case of too much alkyl-modified PVA blended therein, and the long term thermal stability was not sufficient in a case of too little.

Comparative Example 13

In the same way as Example 5 other than not adding the alkyl-modified PVA to the polyvinyl chloride resin, the thermal stability and the colorability were evaluated. The results of evaluation are shown in Table 2. The thermal stability was not sufficient.

Comparative Example 14, 15

In the same way as Example 5 other than modifying the amount of zinc stearate blended therein as shown in Table 2, the thermal stability and the colorability were evaluated. The results of evaluation are shown in Table 2. Any of them were insufficient in the thermal stability and the sheets were colored.

Comparative Example 16

(Production of PVA with SH at Terminal)

In a 6 L reaction vessel provided with a stirrer, a nitrogen inlet port, an additive inlet port, and an initiator addition port, 2450 g of vinyl acetate and 1050 g of methanol were charged and were raised in temperature to 60°C, followed by purging inside the system with nitrogen by nitrogen bubbling for 30 minutes. As a chain transfer agent, a 15% concentration solution of thioacetic acid dissolved in methanol was prepared and was purged with nitrogen by bubbling with a nitrogen gas. The temperature within the reaction vessel was adjusted to 60°C and 5. 6 g of the methanol solution of thioacetic acid prepared in advance was added thereto, and then 2.0 g of 2,2'-azobis(isobutyronitrile) was added to initiate polymerization. The polymerization temperature was maintained at 60°C during the polymerization, and the 15% methanol solution of thioacetic acid was continuously added at 14.5 mL/hr. It was cooled after four hours when the polymerization conversion reached 60% to terminate the polymerization. Subsequently, unreacted vinyl acetate was removed under reduced pressure to obtain a methanol solution of polyvinyl acetate (PVAc) . A methanol solution of NaOH (10% concentration) was added to a PVAc solution adjusted to 30% so as to make the alkali molar ratio (mole number of NaOH/ mole number of vinyl ester unit in PVAc) to become 0.008 for saponification. By way of the above operation, a PVA with SH at a terminal was obtained that has a degree of polymerization of 250 and has a degree of saponification of 88 mol%. The sodium acetate content measured by isotachophoresis was 1.0%. The modified PVA was dissolved in heavy water for nuclear magnetic resonance analysis, and the presence of an SH group at one terminal of the molecules was confirmed.
The thermal stability and the colorability were evaluated similarly other than using the PVA with SH at a terminal instead of the alkyl-modified PVA used in Example 5. The results of evaluation are shown in Table 2.

Comparative Examples 17 through 18

They are examples of adding 1 part by weight of glycerin monostearate, as a lubricant, based on 100 parts by weight of the polyvinyl chloride resin. It was mixed in the same way as Example 5 in a formula shown in Table 2, and the thermal stability and the colorability were evaluated. The results of evaluation are shown in Table 2.
[Table 1]

| | Acid-Modified PVA | | | Evaluation Conditions and Results | | | | |
|---|---|---|---|---|---|---|---|---|
| | Degree of Polymerization | Degree of Saponification (mol%) | Terminal Modification Group | PVA (parts/PVC 100 parts) | Zinc Compound (parts/PVC 100 parts) | Glycerin Monostearate (parts/PVC 100 parts) | Time Period to be Blackened (min) | Colorability |
| Example 1 | 250 | 63 | Sodium Carboxylate | 1 | 2 | 0 | 140 | A |
| Example 2 | 250 | 62 | Sodium Sulfonate | 1 | 2 | 0 | 140 | A |
| Example 3 | 250 | 63 | Sodium Carboxylate | 1 | 2 | 1 | 160 | A |
| Example 4 | 250 | 62 | Sodium Sulfonate | 1 | 2 | 1 | 160 | A |
| Comparative Example 1 | 250 | 62 | Unmodified | 1 | 2 | 0 | 110 | B |
| Comparative Example 2 | 250 | 63 | Sodium Carboxylate | 0.001 | 2 | 0 | 90 | B |
| Comparative Example 3 | 250 | 63 | Sodium Carboxylate | 10 | 2 | 0 | 140 | C |
| Comparative Example 4 | - | - | - | 0 | 2 | 0 | 45 | A |
| Comparative Example 5 | 250 | 63 | Sodium Carboxylate | 1 | 0.001 | 0 | 30 | A |
| Comparative Example 6 | 250 | 63 | Sodium Carboxylate | 1 | 10 | 0 | 40 | A |
| Comparative Example 7 | 250 | 63 | SH | 1 | 2 | 0 | 100 | C |
| Comparative Example 8 | 250 | 62 | Unmodified | 1 | 2 | 1 | 120 | B |

(continued)

| | Acid-Modified PVA | | | | Evaluation Conditions and Results | | | | |
|---|---|---|---|---|---|---|---|---|---|
| | Degree of Polymerization | Degree of Saponification (mol%) | Terminal Modification Group | PVA (parts/PVC 100 parts) | Zinc Compound (parts/PVC 100 parts) | Glycerin Monostearate (parts/PVC 100 parts) | Time Period to be Blackened (min) | Colorability |
| Comparative Example 9 | 250 | 63 | SH | 1 | 2 | 1 | 110 | B |

[Table 2]

| | Alkyl-Modified PVA | | | Evaluation Conditions and Results | | | | |
|---|---|---|---|---|---|---|---|---|
| | Degree of Polymerization | Degree of Saponification (mol%) | Carbon Number of Alkyl Mercaptan | PVA (parts/PVC 100 parts) | Zinc Compound (parts/PVC 100 parts) | Glycerin Monostearate (parts/PVC 100 parts) | Time Period to be Blackened (min) | Colorability |
| Example 5 not part of the invention | 250 | 88 | 12 | 1 | 2 | 0 | 190 | A |
| Example 6 not part of the invention | 250 | 88 | 8 | 1 | 2 | 0 | 180 | A |
| Example 7 not part of the invention | 250 | 88 | 6 | 1 | 2 | 0 | 150 | A |
| Example 8 not part of the invention | 250 | 88 | 12 | 1 | 2 | 1 | 200 | A |
| Example 9 not part of the invention | 250 | 88 | 8 | 1 | 2 | 1 | 190 | A |
| Example 10 not part of the invention | 250 | 88 | 6 | 1 | 2 | 1 | 170 | A |
| Comparative Example 10 | 250 | 88 | 4 | 1 | 2 | 0 | 100 | A |
| Comparative Example 11 | 250 | 88 | 12 | 0.001 | 2 | 0 | 85 | B |
| Comparative Example 12 | 250 | 88 | 12 | 10 | 2 | 0 | 170 | C |
| Comparative Example 13 | - | - | - | 0 | 2 | 0 | 60 | A |

EP 2 292 690 B1

16

(continued)

| | Alkyl-Modified PVA | | | Evaluation Conditions and Results | | | | |
|---|---|---|---|---|---|---|---|---|
| | Degree of Polymerization | Degree of Saponification (mol%) | Carbon Number of Alkyl Mercaptan | PVA (parts/PVC 100 parts) | Zinc Compound (parts/PVC 100 parts) | Glycerin Monostearate (parts/PVC 100 parts) | Time Period to be Blackened (min) | Colorability |
| Comparative Example 14 | 250 | 88 | 12 | 1 | 0.001 | 0 | 80 | A |
| Comparative Example 15 | 250 | 88 | 12 | 1 | 10 | 0 | 95 | A |
| Comparative Example 16 | 250 | 88 | SH | 1 | 2 | 0 | 90 | C |
| Comparative Example 17 | 250 | 88 | 4 | 1 | 2 | 1 | 110 | A |
| Comparative Example 18 | 250 | 88 | SH | 1 | 2 | 1 | 100 | B |
| * Not part of the invention | | | | | | | | |

## EP 2 292 690 B1

### Claims

1. A polyvinyl chloride resin composition comprising: from 0.005 to 5 parts by weight of a vinyl alcohol-based polymer having a degree of saponification of from 30 to 99.9 mol%, having a viscosity average degree of polymerization of 1000 or less, and having a carboxyl group, a sulfonic acid group, or a salt thereof at a terminal; and from 0.01 to 5 parts by weight of a zinc compound, based on 100 parts by weight of a polyvinyl chloride resin.

2. A method of producing a polyvinyl chloride resin composition, comprising adding: from 0.005 to 5 parts by weight of a vinyl alcohol-based polymer having a degree of saponification of from 30 to 99.9 mol%, having a viscosity average degree of polymerization of 1000 or less, and having a carboxyl group, a sulfonic acid group, or a salt thereof at a terminal; and from 0.01 to 5 parts by weight of a zinc compound, based on 100 parts by weight of a polyvinyl chloride resin to the polyvinyl chloride resin.

3. The polyvinyl chloride resin composition according to claim 1 further comprising from 0.001 to 10 parts by weight of a lubricant based on 100 parts by weight of the polyvinyl chloride resin.

4. The polyvinyl chloride resin composition according to claim 3, wherein the lubricant is a fatty acid ester of polyol.

5. The polyvinyl chloride resin composition according to claim 4, wherein the fatty acid ester of polyol is glycerin monostearate.

6. The method of producing a polyvinyl chloride resin composition according to claim 2, further comprising adding from 0.001 to 10 parts by weight of a lubricant based on 100 parts by weight of the polyvinyl chloride resin.

### Patentansprüche

1. Polyvinylchloridharzzusammensetzung, umfassend: von 0,005 bis 5 Gewichtsteilen eines Vinylalkohol-basierten Polymers, das einen Verseifungsgrad von 30 bis 99,9 Mol% aufweist, einen viskositätsgemittelten Polymersitionsgrad von 1000 oder weniger aufweist, und eine Carboxylgruppe, eine Sulfonsäuregruppe oder ein Salz davon an einem Ende aufweist; und von 0,01 bis 5 Gewichtsteilen einer Zinkverbindung, basierend auf 100 Gewichtsanteilen eines Polyvinylchloridharzes.

2. Verfahren zur Herstellung einer Polyvinylchloridharzzusammensetzung, umfassen das Zugeben von: von 0,005 bis 5 Gewichtsteilen eines Vinylalkohol-basierten Polymers, das einen Verseifungsgrad von 30 bis 99,9 Mol% aufweist, einen viskositätsgemittelten Polymersitionsgrad von 1000 oder weniger aufweist, und eine Carboxylgruppe, eine Sulfonsäuregruppe oder ein Salz davon an einem Ende aufweist; und von 0,01 bis 5 Gewichtsteilen einer Zinkverbindung, basierend auf 100 Gewichtsteilen eines Polyvinylchloridharzes, zu dem Polyvinylchloridharz.

3. Polyvinylchloridharzzusammensetzung nach Anspruch 1, weiter umfassend von 0,001 bis 10 Gewichtsteilen eines Schmiermittels, basierend auf 100 Gewichtsteilen des Polyvinylchloridharzes.

4. Polyvinylchloridharzzusammensetzung nach Anspruch 3, wobei das Schmiermittel ein Fettsäureester von Polyol ist.

5. Polyvinylchloridharzzusammensetzung nach Anspruch 4, wobei der Fettsäureester von Polyol Glycerinmonostearat ist.

6. Verfahren zur Herstellung einer Polyvinylchloridharzzusammensetzung nach Anspruch 2, weiter umfassend das Zugeben von 0,001 bis 10 Gewichtsteilen eines Schmiermittels, basierend auf 100 Gewichtsteilen des Polyvinylchloridharzes.

### Revendications

1. Une composition de résine de chlorure de polyvinyle comprenant : de 0,005 à 5 parties en poids de polymère vinylique à base d'alcool ayant un degré de saponification de 30 à 99,9 % en moles, ayant un degré moyen de viscosité de polymérisation de 1 000 ou moins, et contenant un groupe carboxyle, un groupe acide sulfonique ou un sel de celui-ci à une extrémité ; et de 0,01 à 5 parties en poids d'un composé de zinc, sur base de 100 parties en poids d'une résine de chlorure de polyvinyle.

2. Un procédé permettant de produire une composition de résine de chlorure de polyvinyle, consistant à ajouter à la résine de chlorure de polyvinyle : de 0,005 à 5 parties en poids de polymère vinylique à base d'alcool ayant un degré de saponification de 30 à 99,9 % en moles, ayant un degré moyen de viscosité de polymérisation de 1 000 ou moins, et contenant un groupe carboxyle, un groupe acide sulfonique ou un sel de celui-ci à une extrémité ; et de 0,01 à 5 parties en poids d'un composé de zinc, sur base de 100 parties en poids d'une résine de chlorure de polyvinyle

3. La composition de résine de chlorure de polyvinyle selon la revendication 1, comprenant en outre de 0,001 à 10 parties en poids d'un lubrifiant sur base de 100 parties en poids de la résine de chlorure de polyvinyle.

4. La composition de résine de chlorure de polyvinyle selon la revendication 3, dans laquelle le lubrifiant est un ester d'acide gras de polyol.

5. La composition de résine de chlorure de polyvinyle selon la revendication 4, dans laquelle l'ester d'acide gras de polyol est le monostéarate de glycérine.

6. Le procédé permettant de produire une composition de résine de chlorure de polyvinyle selon la revendication 2, comprenant en outre de 0,001 à 10 parties en poids d'un lubrifiant sur base de 100 parties en poids de la résine de chlorure de polyvinyle.

**REFERENCES CITED IN THE DESCRIPTION**

**Patent documents cited in the description**

- JP 50092947 A
- JP 54081359 A
- JP 57147552 A
- JP 60238345 A
- JP 1178543 A
- JP 6287387 A
- JP 9003286 A
- JP 9031281 A
- WO 9115518 A

**Non-patent literature cited in the description**

- *Japanese Journal of Polymer Science and Technology,* 1990, vol. 47 (3), 197
- *Japanese Journal of Polymer Science and Technology,* 1990, vol. 47 (6), 509
- *Japanese Journal of Polymer Science and Technology,* 1993, vol. 50 (2), 65
- *Polymers & Polymer Composites,* 2003, vol. 11, 649
- *Journal of the Adhesion Society of Japan,* 2007, vol. 43 (2), 43
- *Journal of the Adhesion Society of Japan,* vol. 43 (2), 43